# EUROPÄISCHE PATENTSCHRIFT

(11) **EP 0 456 777 B1**
(45) Veröffentlichungstag und Bekanntmachung des Hinweises auf die Patenterteilung: **22.09.1993**
(21) Anmeldenummer: 90916241.4
(22) Anmeldetag: 10.11.1990
(51) Int. Cl.: A61C 8/00, A61C 13/225

(54) **SCHRAUBENKÖRPER FÜR DAS VERSCHRAUBEN EINES MEHRTEILIGEN ZAHNERSATZES**
THREADED BODY FOR SECURING A MULTI-PART TOOTH REPLACEMENT
CORPS DE VIS POUR LE VISSAGE D'UNE PROTHESE DENTAIRE COMPOSEE

(30) Priorität: 07.12.1989 DE 8914415 U
(43) Veröffentlichungstag der Anmeldung: 21.11.1991
(73) Patentinhaber: ZL Microdent-Attachment GmbH, D-58339 Breckerfeld (DE)
(72) Erfinder:
(74) Vertreter: Dörner, Lothar, Dipl.-Ing.
(86) Internationale Anmeldenummer: DE9000851
(87) Internationale Veröffentlichungsnummer: WO9108713

(56) Entgegenhaltungen:
- EP-A- 0 288 702
- EP-A- 0 312 935
- EP-A- 0 313 222
- EP-A- 0 320 024

## Beschreibung

### Technisches Gebiet:

Die Erfindung betrifft einen Schraubenkörper für das Verschrauben eines mehrteiligen Zahnersatzes gemäß dem ersten Teil des Patentanspruches. Ein derartiger Schraubenköper ist beispielsweise aus der EP-A-0 288 702 bekannt.

### Stand der Technik:

Zum Verschrauben von mehrteiligem Zahnersatz, zum Beispiel von geteilten Brücken und Implantat-Suprastrukturen, werden Schraubenkörper verwendet, die aus zwei oder mehr Einzelteilen bestehen. Schraubenkörper der gattungsgemäßen Art bestehen aus einer Gewindehülse, einem Überfallring und einer Konusschraube. Die Gewindehülse weist ebenso wie der Gewindeschaft der Konusschraube über die gesamte Länge ein Gewinde auf. Der Überfallring hat eine Zylinder-Außenfläche und eine Kegel-Innenfläche, jedoch kein Gewinde. Die bekannten Schraubenkörper weisen folgende Nachteile auf: Der Zahnarzt, der die Teile des mehrteiligen Zahnersatzes, zum Beispiel die Brückenkörper, mit der Konusschraube im Mund des Patienten verschrauben will, hat die Schwierigkeit, die Konusschraube bedingt durch ihren kleinen Durchmesser sicher in die Gewindehülse einzuführen. Im Praxisalltag kommt es vor, daß die Schraube von dem Patienten verschluckt wird.

### Darstellung der Erfindung:

Hier will die Erfindung Abhilfe schaffen. Der Erfindung liegt die Aufgabe zugrunde, einen Schraubenkörper der gattungsgemäßen Art so auszubilden, daß die Konusschraube mit dem Überfallring verbindbar und in ihm unverlierbar gehalten ist, ohne die Funktion des Schraubenkörpers zu beeinträchtigen. Diese Anfgabe wird von dem im Patentanspruch angegebenen Schraubenkörper gelöst.

Bei der Erfindung weist der Überfallring im Gegensatz zu den bekannten Überfallringen in dem Teil, an dem sein Innenkonus den kleinsten Durchmesser hat, ein Innengewinde auf, in das der Gewindeschaft der Konusschraube schraubbar ist. Der Gewindeschaft der Konusschraube ist nur an dem dem Kopf entgegengesetzten Ende mit einem in das Innengewinde des Überfallrings schraubbaren Außengewinde versehen. Dieses Außengewinde wird durch den Überfallring geschraubt. Hat das Außengewinde den Überfallring durchsetzt, ist die Konusschraube in dem Überfallring einerseits verschiebbar, andererseits unverlierbar gehalten. Beim Aufsetzen des Überfallrings auf die Gewindehülse liegt das Außengewinde der Konusschraube in dem neuerungsgemäß vorgesehenen gewindefreien Teil der Gewindehülse.

Mit der Erfindung wird erreicht, daß die Konusschraube nicht ungewollt aus der Gewindehülse herausfällt. Bei Verwendung mehrerer Schraubenkörper ist das gleichzeitige Aufsetzen mehrerer Überfallringe möglich.

Kurze Beschreibung der Zeichnung:

Ein Ausführungsbeispiel der Erfindung ist in der Zeichnung dargestellt und wird im folgenden näher beschrieben. Es zeigen in vergrößerter Darstellung:

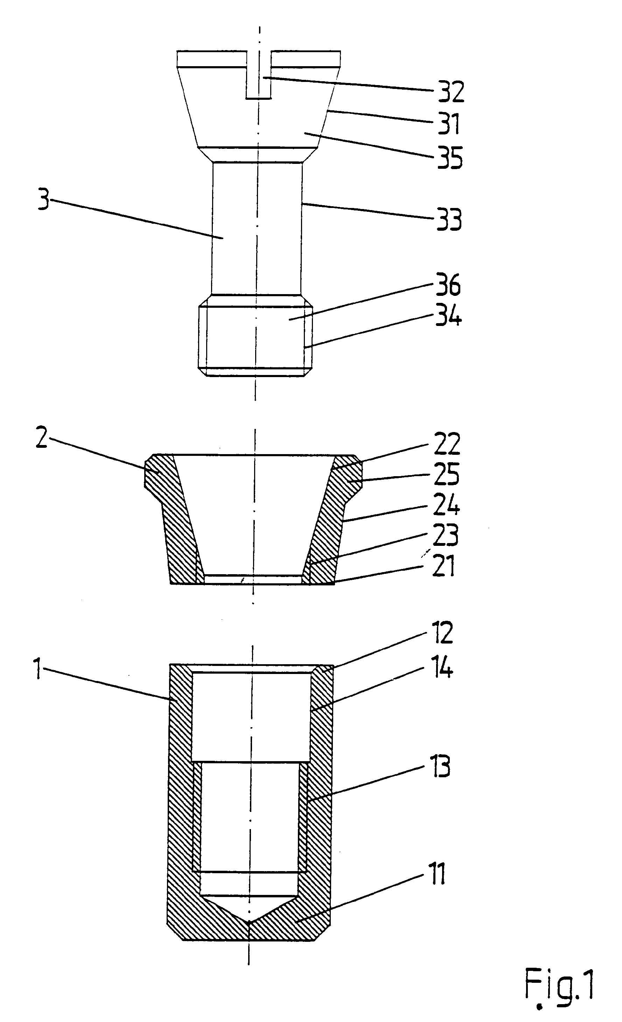

- Fig. 1: einen Axialschnitt durch einen Schraubenkörper in nicht montiertem Zustand;

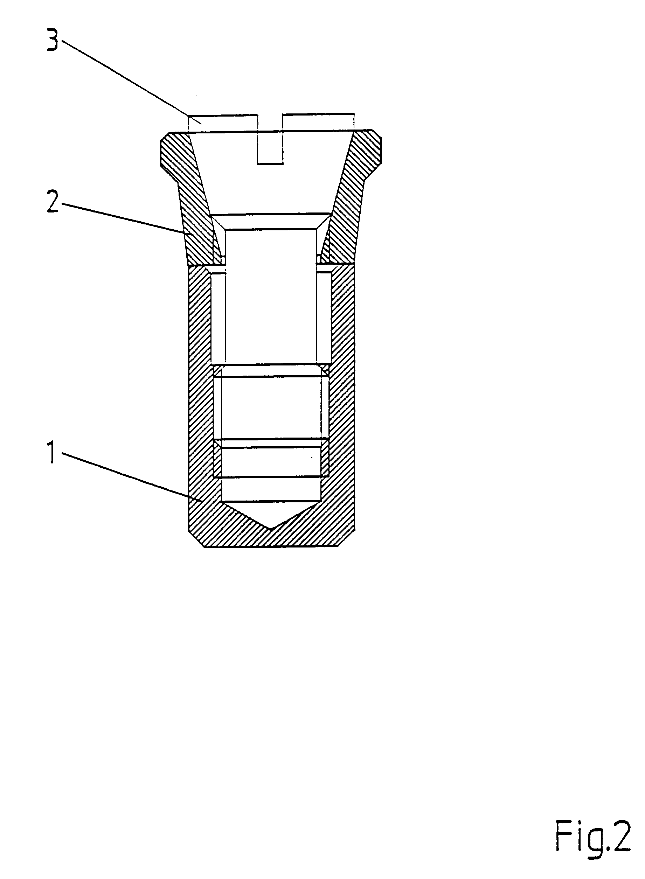

- Fig. 2: den in Figur 1 dargestellten Schraubenkörper in montiertem Zustand.

Bester Weg zur Ausführung der Erfindung:

Der als Ausführungsbeispiel gewählte Schraubenkörper weist eine Gewindehülse 1 auf. An einer Stirnseite der Gewindehülse 1 liegt ein Überfallring 2 an. Die Gewindehülse 1 und der Überfallring 2 sind durch eine in die Gewindehülse 1 geschraubte und am Überfallring 2 abgestützte Konusschraube 3 in Anlage zueinander gehalten.

Die Gewindehülse 1 ist im wesentlichen als Hohlzylinder ausgebildet. An einem Ende ist sie durch einen Boden 11 verschlossen, am entgegengesetzten Ende, ihrem Rand 12, ist sie offen. Im Abstand von dem Boden 11 weist die Gewindehülse 1 ein Innengewinde 13 auf. Das Innengewinde ist nur über einen Teil der Innenwand der Gewindehülse 1 geführt. An das Innengewinde 13 schließt sich bis zum Rand 12 ein gewindefreier Teil 14 an.

Der Überfallring 2 liegt mit seiner unteren Stirnfläche 21 an dem Rand 12 der Gewindehülse 1 an. Der Überfallring 2 weist einen Innenkonus 22 auf, der sich zu der Gewindehülse 1 hin verjüngt. Im Bereich des kleinsten Durchmessers ist der Überfallring 2 mit einem Innengewinde 13 versehen. Auch außen ist der Überfallring 2 als Außenkonus 24 ausgeführt, der auf der der Gewindehülse 1 abgewandten Seite in eine Randwulst 25 übergeht.

Die Konusschraube 3 weist einen Kopf 35 auf, der mit einem Außenkonus 31 versehen ist. Der Außenkonus 31 ist dem Innenkonus 22 des Überfallrings 2 angepaßt. Außerdem weist der Kopf 35 der Konusschraube 3 einen Schlitz 32 für die Aufnahme eines Schraubwerkzeugs auf. In dem an den Kopf 35 anschließenden Teil 33 ist die Konusschraube 3 gewindefrei ausgeführt. An dem dem Außenkonus 31 entgegengesetzten Ende weist die Konusschraube 3 einen Gewindeschaft 36 mit einem Außengewinde 34 auf. Das Außengewinde 34 ist dem Innengewinde 23 des Überfallrings 2 sowie dem Innengewinde 13 der Hülse 1 angepaßt.

Die Konusschraube 3 wird zunächst mittels ihres Außengewindes 34 durch das Innengewinde 23 des Überfallrings 2 geschraubt. Nachdem der gesamte Gewindeschaft 36 den Überfallring 2 passiert hat, ist die Konusschraube 3 innerhalb des Überfallrings 2 in Axialrichtung bewegbar. Die Konusschraube 3 ist aber unverlierbar in dem Überfallring 2 gehalten. Nach Aufsetzen des Überfallrings 2 mit seiner unteren Stirnfläche 21 auf den Rand 12 der Gewindehülse 1 befindet sich der Gewindeschaft 36 der Konusschraube 3 in dem gewindefreien Teil 14 der Gewindehülse 1. Zum Verbinden der Teile des Schraubenkörpers und damit der Teile eines Zahnersatzes braucht lediglich die Konusschraube 3 mit ihrem Gewinde 34 so weit in das Innengewinde 13 der Gewindehülse 1 geschraubt zu werden, bis der Außenkonus 31 der Konusschraube 3 an den Innenkonus 22 des Überfallrings 2 anliegt. Die Teile des mehrteiligen Zahnersatzes sind dann miteinander verbunden.

Bei dem mehrteiligen Zahnersatz handelt es sich beispielsweise um geteilte Brücken oder Implantat-Suprastrukturen. Die Gewindehülse 1 wird an eine einzuzementierende Krone bzw. ein gesetztes Implantat angebracht. Der Überfallring 2 ist Bestandteil eines bedingt herausnehmbaren Zahnersatzes bzw. Brückenkörpers. Die Gewindehülse 1 und der Überfallring 2 bestehen vorzugsweise aus einer angußfähigen Legierung, zum Beispiel Platin-Iridium.

### Gewerbliche Verwertbarkeit:

Die Erfindung ist gewerblich verwendbar auf dem Gebiet der Zahnprothetik.

## Patentansprüche

1. Schraubenkörper für das Verschrauben eines mehrteiligen Zahnersatzes, der eine Gewindehülse (1), einen an dem Rand (12) der Gewindehülse (1) anliegenden Überfallring (2) und eine mit ihrem Gewindeschaft (36) in die Gewindehülse (1) geschraubten und mit ihrem Kopf (35) in einem Innenkonus (22) des Überfallrings (2) abgestützte Konusschraube (3) aufweist, wobei die Gewindehülse (1) im Anschluß an ihren Rand (12) und die Konusschraube (3) zwischen Kopf (35) und Gewindeschaft (36) mit je einem gewindefreien Teil (14; 33) versehen sind, dadurch gekennzeichnet, daß der Überfallring (2) in dem Teil, an dem sein Innenkonus (22) den kleinsten Durchmesser hat, mit einem dem Gewindeschaft (36) der Konusschraube (3) angepaßten Innengewinde (23) versehen ist.

## Claims

1. A screw element for connecting a multi-part dental prosthesis including a threaded sleeve (1), a locknut (2) which lies against the edge (12) of the threaded sleeve (1) and a cone screw (3) whose threaded shaft (36) is screwed into the threaded sleeve (1) and whose head (35) is supported in an internal cone (22) of the locknut (2), whereby the threaded sleeve (1), following its edge (12), and the cone screw (3), between its head (35) and its threaded shaft (36), are each provided with a portion (14; 33) that is free of threads, characterized in that the locknut (2) is provided, in the portion of its internal cone (22) where it has the smallest diameter, with an internal thread (23) that is adapted to the threaded shaft (36) of the cone screw (3).

## Revendications

1. Corps de vis pour le vissage d'une prothèse dentaire composée, comprenant une douille filetée (1), une bague d'accouplement (2) appliquée contre le bord (12) de la douille filetée (1) et une vis conique (3) dont la tige filetée (36) est vissée dans la douille filetée (1) et dont la tête (35) prend appui dans un cône intérieur (22) de la bague d'accouplement (2), la douille filetée (1), à la suite de son bord (12), et la vis conique (3), entre la tête (35) et la tige filetée (36), présentant chacune une partie non filetée (14; 33), **caractérisé en ce** que la bague d'accouplement (2) est pourvue, dans la partie dans laquelle le diamètre de son cône intérieur (22) est le plus faible, d'un filetage intérieur (23) qui est adapté à la tige filetée (36) de la vis conique (3).
